Europäisches Patentamt

**European Patent Office**

**Office européen des brevets**

(11) Publication number: **0 060 816**
A1

# EUROPEAN PATENT APPLICATION

(21) Application number: **82830041.8**

(22) Date of filing: **25.02.82**

(51) Int. Cl.³: **B 65 G 65/46,** B 65 G 33/32

(30) Priority: **18.03.81 IT 2896281 U**

(71) Applicant: **WAM S.p.A., Via Cavour Frazione Motta S/Secchia, I-41030 Cavezzo (Modena) (IT)**

(43) Date of publication of application: **22.09.82 Bulletin 82/38**

(72) Inventor: **Marchesini, Wainer, Via Lombardia, 39, I-41012 Carpi (Modena) (IT)**

(84) Designated Contracting States: **AT BE CH DE FR GB LI NL SE**

(74) Representative: **Bonfreschi, Mario, Bugnion S.p.A. Viale Trento Trieste, 25, I-41100 Modena (IT)**

(54) **A feed - discharge union for screw conveyors.**

(57) The fundamental aim of the invention is that of creating universal feed and discharge conduit-unions for screw conveyors — that is, unions that can be fitted to the jacket (14) of a screw or auger so as to function regardless of the latter's angle of inclination when in operation. The union to which the invention relates comprises a first portion (1) and a second portion (2) paired reciprocally in such a way that one stretch (4) or (24) of portion (2) is located inwardly of a stretch (3) of portion (1), the said stretch (3) being rounded in shape; it being envisaged that stretch (4) or (24) take up the entire orifice offered thereto by stretch (3) and adhere to the inner surface of said stretch (3) thus allowing positioning of portions (1) and (2) with longitudinal axes inclined one with respect to the other; one of the two said portions being affixed to the screw conveyor.

EP 0 060 816 A1

ACTORUM AG

A feed — discharge union for screw conveyors.

The invention described herein relates to a feed and/or discharge union for screw conveyors.

For the most part, screw conveyor systems incorporate a short feed tube positioned at one end of the single conveyor, and a discharge tube located similarly near to its other end.

Further, in many such embodiments the feed tube is affixed to the lower opening of a container or hopper etc. holding the substance to be transferred, in order to perform the additional function of bearing up the screw conveyor's own weight.

The aforesaid tubes are in fact short, cylindrical and tubular elements welded or brazed to the screw jacket, and since such tubes must be arranged —almost always— with their logitudinal axis disposed vertically, and since by the same token the screw itself may need to be inclined to any one of a number of degrees according to the use to which it is being put, and the to the nature of the overall plant complex, it follows that both the mouth by way of which the tubes are attached to the screw jacket,and the necessary opening in the jacket itself destined to mate therewith, need to be cut differently for each single variation in the screw axis of inclination.

This gives rise to obvious drawbacks in terms of operating a production line for turning out conveyors: in short —complex manufacture, and the need for warehousing a vast number of parts.

The fundamental object of the invention described herein is that of precluding such drawbacks, by the introduction of "universal" feed and discharge unions which can be affixed to a screw jacket in one, unvarying fashion regardless —at any rate within ample given limits— of the angle of inclination of the screw axis once the conveyor is in operation.

Another important advantage offered by the unions to which the invention relates is that the parts through which they attach to any plant requiring use of a screw conveyor are able to accommodate being shifted and turned, thus adapting to the plant layout even in those cases where geometrical inaccuracy exists between plant components and conveyor —inaccuracy which otherwise would disqualify the use of the screw conveyor altogether.

A further,marked advantage offered by the unions to which the invention relates is that of their ability to absorb vibrations to which the screw conveyor is
subject.

These and other advantages are attained to by the
invention described herein which is characterised by
the fact that:

-it comprises a first portion 1 and a second portion 2
paired reciprocally in such a way that one stretch 4
or 24 of portion 2 is located inwardly of a stretch 3
of portion 1,the said stretch 3 being rounded in shape;
provision being made for the said stretch 4 or 24 to
take up the entire orifice offered thereto by stretch 3,
and to adhere to the inner surface of the said stretch 3,
allowing the positioning of portions 1 and 2 with longitudinal axes inclined one with respect to the other; .
one of the said portions being affixed to the conveyor.

Further features and advantages of the invention
described herein will emerge more clearly from the
detailed description that follows of certain possible
ways of embodying the union, illustrated as strictly
unlimitative examples with the aid of the accompanying
drawings, in which:

- fig 1 shows the general view of a screw conveyor
  incorporating feed and discharge unions of the
  type to which the invention refers;

- fig 2 shows one embodiment of the union in longitudinal cross-section;

-   fig 3 shows a further embodiment of the union, likewise in longitudinal cross-section;

With reference to the drawings, 10 denotes a screw conveyor comprising a cylindrical, tubular jacket 14 in which an auger or screw 13 is caused to rotate by means of a motor 15 positioned at the lower conveyor extremity.

11 and 12 denote feed and discharge conduits, respectively, the feed located near to the lower-screw-end, the discharge near to the upper-screw-end.

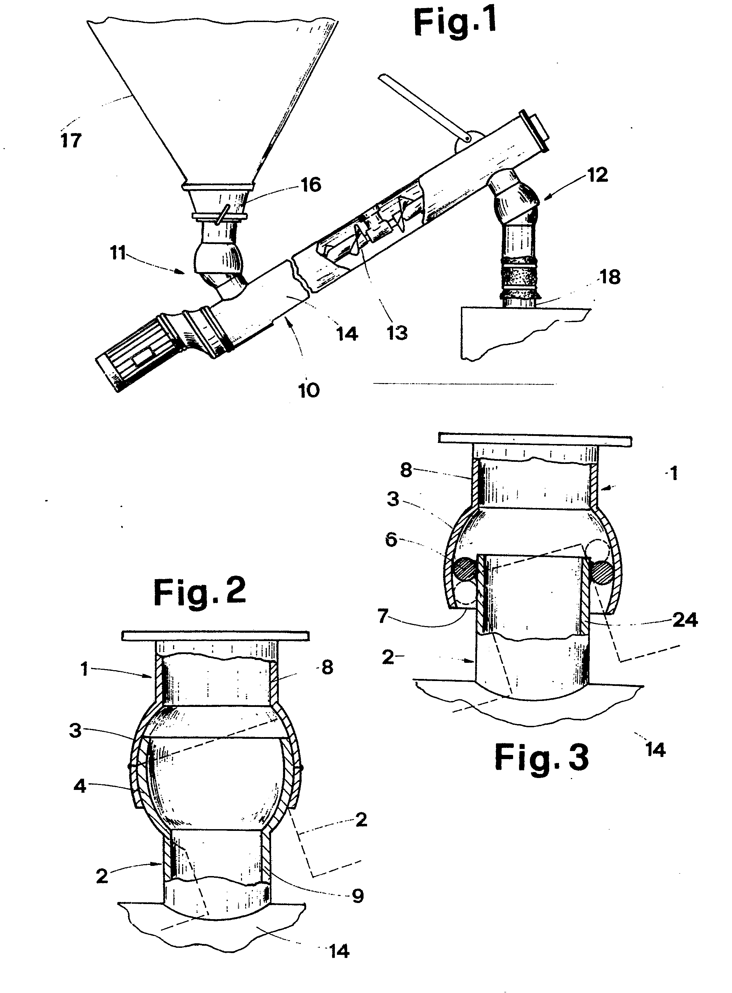

The conduit, or union 11 — shown in detail in fig 2— comprises a first portion 1 and a second portion 2. Portion 1 consists of a cylindrical stretch 8 and a further stretch 3; portion 2 consisting of a cylindrical stretch 9 and a further stretch 4. Portions 1 and 2 are paired in such a way that stretch 4 of portion 2 is positioned inwardly of stretch 3; the said stretch 3 of portion 1 exhibiting a surface area in the form of segment to a sphere —to all intents and purposes— any given curve radius of which centring upon a point within the said segment.

Stretch 4 also exhibits a surface area in the form of segment to a sphere, and adheres thereby to the inner surface of stretch 3.

By virtue of the shape thus described, portions 1 and 2 articulate one with the other —that is, they may be set with longitudinal axes at an inclination one with respect to the other (as may be seen in the broken line of fig 2), the angle being variable at will within given structural limits; moreover, either portion 1 and 2 may rotate about its own longitudinal axis with respect to the other portion.

What is more, stretch 4 takes up the entire orifice presented thereto by stretch 3, so that whatever substance is passed through portion 1 will be gathered into and through portion 2 without any fear of loss, regardless of the reciprocal angled position of portions 1 and 2. When adopted as feed union, portion 2 is affixed —by means of welding, soldering or brazing etc.— to the screw jacket 14, whilst portion 1 is connected —by way of a flange for instance— to the lower opening 16 of a container bin or hopper 17.

In the case of the union's acting as discharge conduit 12 the structural form is identical to that of feed 11; the only accountable difference being that portion 1 is affixed to the screw jacket 14 rather than portion 2.

In the second form of embodiment illustrated in fig 3, provision is made likewise for two portions 1 and 2 of which first portion 1 corresponds in principle to that of the first form of embodiment —that is, it consists of a cylindrical stretch 8 and a further stretch 3 whose surface area has the form of segment to a sphere and whose curve radius centres from all points thereon into a point lying within the said segment.

Portion 2 on the other hand is cylindrical and the corresponding further stretch thereof 24, positioned internally of strtech 3, is of lesser diameter that the latter; moreover an annular element 6 is affixed to stretch 24, its surface being rounded —more exactly, possessing a circular transverse cross-section— and its maximum diameter greater than the orifice diameter 7 of portion 3; this feature intended to avoid the possibility of portion 2 becoming separated from stretch 3.

Stretch 24 and element 6 adhere as one to the inner surface of stretch 3, the resulting pair arranged so that portions 1 and 2 may articulate with one another —that is, they may be set with longitudinal axes at an inclination one with respect to the other (as shown by the broken line in fig 3), the angle being variable at will within given structural limits; moreover, either portion 1 and 2 may rotate about its own longitudinal axis with respect to the other portion.

Furthermore, the fact that stretch 24 and element 6 take up the entire orifice offered thereto by stretch 3 ensures that whatever substance is passed through portion 1 will be gathered into and through portion 2 without any fear of loss, regardless of the reciprocal angled position of portions 1 and 2.

As with the first form of embodiment, portion 2 of the second form of embodiment is affixed to the screw jacket 14 when performing feed function, whereas portion 1 joins with the jacket where the union discharges. Advantages offered by the invention thus described are numerous:

- first and foremost, fitting of portions 1 and 2 to the screw conveyor jacket 14 will be at the same angle in whatever case (at rightangles in the drawings) regardless of the screw conveyor's angle of inclination (albeit the latter is governed by rational limitations). This provides the solution to those problems outlined in the preamble, inasmuch as the need for cutting feed and discharge tubes and screw jackets according to functional angle-requirements can be dispensed with;

- furthermore, the possibility one possesses of positioning the feed and discharge conduits at varying angles is of enormous advantage when setting up the conveyor, as the conveyor and unions can be adapted to the fixed positions of bin or hopper 17 and further conduit 18;

8

0060816

- again, it should not be forgotten that the special articulated pairing of the feed union can absorb those vibrations to which the screw-conveyor itself is subject;

- finally, the feed or discharge union thus described is such that portions 1 and 2 are inseparable and therefore perform the additional function of providing structural support for the screw conveyor, bearing the weight thereof wholly or in part.

Numerous modifications of a practical nature may be applied to the invention's structure when carried into effect, without by any means straying from within the bounds of protection afforded to the concept, as claimed below.

Claims

1)  Feed and/or discharge union for screw conveyors
    characterised by the fact that:
    -   it comprises a first portion (1) and a second
    portion (2) paired reciprocally in such a way that one
    stretch (4) or (24) of portion (2) is located inwardly
    of a stretch (3) of portion (1); said stretch (3) being
    rounded in shape; provision being made for said stretch
    (4) or (24) to take up the entire orifice offered thereto
    by stretch (3) and to adhere to the inner surface of
    said stretch (3) allowing the positioning of portions (1)
    and (2) with longitudinal axes inclined one with respect
    to the other; one of said portions being affixed to the
    screw conveyor.

2)  Union according to claim 1 characterised by the fact that:
    -   said stretch (3) exhibits a surface area in the shape
    of segment to a sphere to all intents and purposes; said
    stretch (4) likewise exhibiting surface area in the shape
    of segment to a sphere to all intents and purposes, aiding
    its adhering to the inner surface of said stretch (3);
    curve radii of the said segments to a sphere converging
    onto a point lying within same and common to both said
    stretches (3) and (4); longitudinal axes of portions (1)

0060816

and (2) lying concurrent and passing through the curve-centre point thus described.

3) Union according to claim 1 characterised by the fact that:
- said stretch (3) exhibits a surface area in the shape of segment to a sphere whose curve-radius centre lies at a point within said segment; said stretch (24) being of lesser diameter than stretch (3) and comprising an annular element (6) affixed to said stretch (24) whose surface is rounded and whose maximum diameter is greater than the orifice diameter (7) of stretch (3); said annular element adhering to the inner surface of stretch (3).

4) Feed and/or discharge union for screw conveyors as described thus and claimed, and designed for fulfilment of the specified objectives.

# Fig.1

17

16

11

13

14

10

12

18

# Fig.2

1

8

3

4

2

2

9

14

# Fig.3

8

3

6

7

2

1

24

14

**European Patent Office**

**EUROPEAN SEARCH REPORT**

Application number

EP 82 83 0041

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US - A - 3 342 355 (LASITER)<br><br>* column 2, lines 33-43; column 3, lines 3-6; figures 1,2,4 *<br><br>-- | 1,2 | B 65 G 65/46<br>33/32 |
| A | FR - A - 2 019 323 (ROLLS-ROYCE)<br><br>* page 2, lines 21-30; figure 1 * | 3 | |

**TECHNICAL FIELDS SEARCHED (Int. Cl. ³)**

B 65 G
B 60 P
F 16 L

The present search report has been drawn up for all claims

| Place of search | Date of completion of the search | Examiner |
|---|---|---|
| The Hague | 15-06-1982 | OSTIJN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82